# EUROPEAN PATENT APPLICATION

(11) **EP 2 119 575 A1**
(43) Date of publication of application: **18.11.2009**
(21) Application number: 08291176.9
(22) Date of filing: 12.12.2008
(51) Int. Cl.: B60C 11/11, B60C 11/12

(54) **Snow tire**

(30) Priority: 15.05.2008 KR 20080045152
(71) Applicant: Kumho Tire Co., Inc., Gwangsan-gu Gwangju 506-711 (KR)
(72) Inventor: Mun, Dae Il, Buk-Gu Gwangju 500-110 (KR)
(74) Representative: Rataboul, Xavier

(57) **Abstract**

The invention discloses a snow tire for improving steering and braking performance while running on a general road surface. The snow tire comprises a plurality of tread blocks (30) subdivided by a plurality of longitudinal grooves (10) which are longitudinally formed on a tread rubber layer consisting of the tread, and a plurality of transverse grooves (20) which are formed widthwise of the tire in cross relation with the longitudinal grooves (10); a plurality of sipes (35) which are formed in the plurality of tread blocks (30) in parallel each other in one direction to subdivide the tread blocks into a plurality of subblocks; and at least one protruded portion which is formed on the side surface of the subblock subdivided by the plurality of sipes (35) of the tread blocks (30).

## Description

### BACKGROUND OF THE INVENTION

This application claims priority to Korean Patent Application No. 10-2008-0045152, filed on May 15, 2008, in the Korean Intellectual Property Office, the entire contents of which are hereby incorporated by reference.

### 1. Field of the Invention

The present invention relates to a snow tire, more specifically to a snow tire for improving steering performance and braking performance while running on all road surfaces not only a snowy road or a ice road but also a general road.

### 2. Description of the Related Art

As is well known, a snow tire refers to a tire manufactured for improving braking performance and steering performance on a snowy road or icy road in wintertime further than a general tire.

The snow tire has a plurality of sipes formed on the tread block that is in contact with the road surface. These sipes form biting edges to increase the friction force with the road surface on a snowy road or icy road so as to improve braking performance and steering performance.

But a plurality of sipes lower the rigidity of the tread block, so on a general wet road or a dry road surface besides a snowy or icy road, it has a disadvantage that the braking performance or steering performance is lowered compared with a summer tire or an all-weather tire.

### SUMMARY OF THE INVENTION

Accordingly, it is an object of the present invention to provide a snow tire which can improve steering performance and braking performance when running on a general road surface while maintaining the snow traction performance by reinforcing the rigidity of the subblocks by virtue of internal friction between subblocks subdivided by the sipes.

In accordance with the present invention, there is provided a snow tire having a carcass to form a body of the tire, a tread that comes in contact with the road surface to protect one portion of the carcass, side walls formed lengthwise across the width of the tire from both sides of the tread to protect the other portion of the carcass, and beads binding both ends of the carcass to fix the tire to a rim, the snow tire comprising: a plurality of tread blocks subdivided by a plurality of longitudinal grooves which are longitudinally formed on a tread rubber layer consisting of the tread, and a plurality of transverse grooves which are formed widthwise of the tire in cross relation with the longitudinal grooves; a plurality of sipes which are formed in the plurality of tread blocks in parallel each other in one direction to subdivide the tread blocks into a plurality of subblocks; and at least one protruded portion which is formed on the side surface of the subblock subdivided by the plurality of sipes of the tread blocks.

In the present invention, the protruded portions may be formed to make concaves and convexes so as to correspond to each other on the side surface of the subblock that face each other with each of the sipes in between.

The protruded portions may make a band shape circumferentially on the side surface of the subblock.

In addition, the protruded portions may be formed in protrusion while making a sloping side from the side surface of the subblock.

Preferably, the sloping side is formed in protrusion while making an angle of inclination between 0° to 90° with the side surface of the subblock.

Preferably, the protruded portions are formed as a wave form while at least one part is alternating in the direction of a height of the subblock.

Preferably, the protruded portions are formed as a wave form while having a first amplitude and a first cycle, and the first amplitude and the cycle range from 0.05 cm to 20 cm, respectively.

Preferably, the protruded portions are formed as a wave form while making an angle between 0° to 90° with the upper surface of the subblock.

In the present invention, the sipes may be formed as a wave form while at least one part is alternating along one direction on the surface of the tread block.

Preferably, the sipes are formed as a wave form while alternating at a second amplitude and a second cycle, and the second amplitude ranges from 0.05 cm to 5 cm and the second cycle ranges from 0.2 cm to 20 cm.

Preferably, the sipes have a radius of curvature and are formed roundly as a wave form, and the radius of curvature ranges from 0.01 cm to 10 cm.

### BRIEF DESCRIPTION OF THE DRAWINGS

These and other objects, features, and advantages of preferred embodiments of the present invention will be more fully described in the following detailed description, taken in conjunction with the accompanying drawings. In the drawings:
Fig. 1 is a side view of a snow tire according to a preferred embodiment of the present invention;
FIG. 2 is an enlarged plan view of the tread block illustrating the portion II of FIG. 1;
FIG. 3 is an enlarged plan view detailedly illustrating the shape of the sipe shown in FIG. 2;
FIG. 4 is a partially cutaway perspective view of the tread block of FIG. 2;
FIG. 5 is a side view illustrating the subblock of FIG.
4;
FIG. 6 is a cross sectional view taken along line VI-VI of FIG. 5; and
FIG. 7 is a perspective view illustrating a sipe die applied to a process for preparing the snow tire according to the preferred embodiment of the present invention;

### DETAILED DESCRIPTION OF THE INVENTION

Below, a preferred embodiment of the present invention will be described in detail with reference to the accompanying drawings so that it can be easily carried out by those skilled in the art. But the present invention can be implemented in various different forms and is not limited to the embodiment described here. In order to clearly describe the present invention, the portions that are not related to the description were omitted from the drawings, and identical reference symbols were attached to identical or similar components throughout the detailed description.

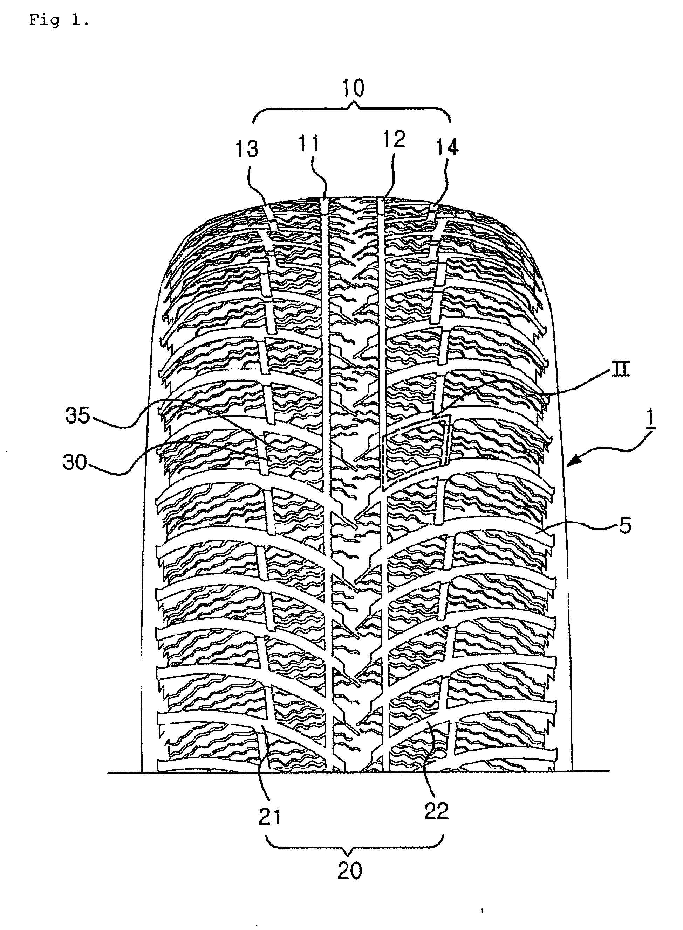

FIG. 1 is a side view of a snow tire according to a preferred embodiment of the present invention.

Commonly, a snow tire 1 has a carcass to form a body of the tire, a tread that comes in contact with the road surface to protect one portion of the carcass, side walls formed lengthwise across the width of the tire from both sides of the tread to protect the other portion of the carcass, and beads binding both ends of the carcass to fix the tire to a rim. These components are well known in the art so a detailed description thereof is omitted herein.

Referring to FIG. 1, the snow tire 1 according to the preferred embodiment of the present invention has a tread pattern of a given shape formed on the tread rubber layer 5 consisting the tread and being in contact with the road surface during running.

The tread pattern is formed by a plurality of longitudinal grooves 10 formed circumferentially around the tire, a plurality of transverse grooves 20 that cross the longitudinal grooves 10 and are formed widthwise of the tire, and tread blocks 30 subdivided by the longitudinal grooves 10 and transverse grooves 20.

In the longitudinal grooves 10 of the preferred embodiment, a first longitudinal groove 11 and a second longitudinal groove 12 are formed circumferentially in the widthwise central portion of the tire. And a third longitudinal groove 13 formed outward of the first longitudinal groove 11 and a fourth longitudinal groove 14 formed outward of the second longitudinal groove 12 are formed respectively in discontinuous inclination circumferentially around the tire so as to further subdivide the blocks subdivided by the transverse grooves 20.

The transverse grooves 20 are formed on the left and right of the vertical central line of the tire, with a left transverse groove 21 and right transverse groove 22 alternating with each other circumferentially around the tire and making circular arcs inclined widthwise of the tire.

A plurality of sipes 35 are formed in the plurality of tread blocks 30 subdivided by the longitudinal grooves 10 and the transverse grooves 20 in parallel to each other in one direction to subdivide the tread blocks 30 into a plurality of subblocks 31.

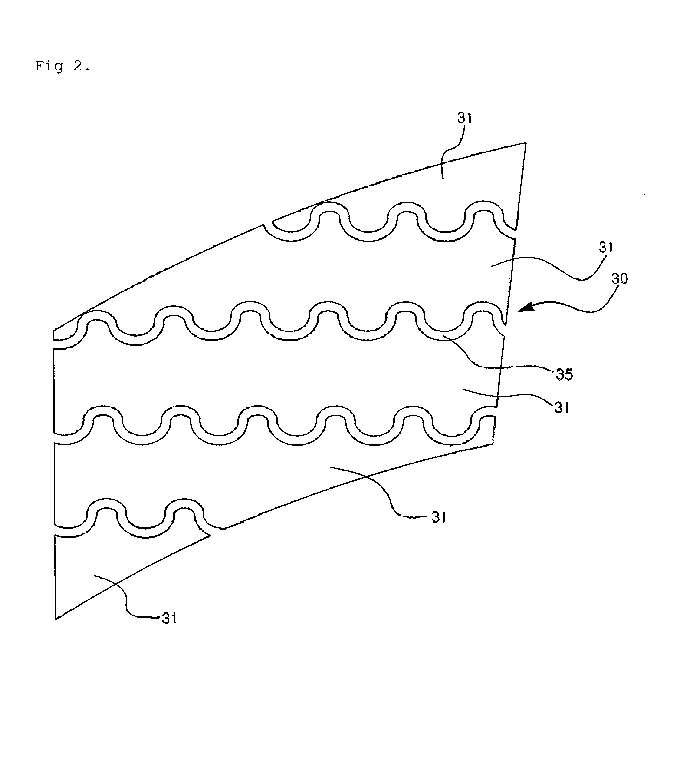

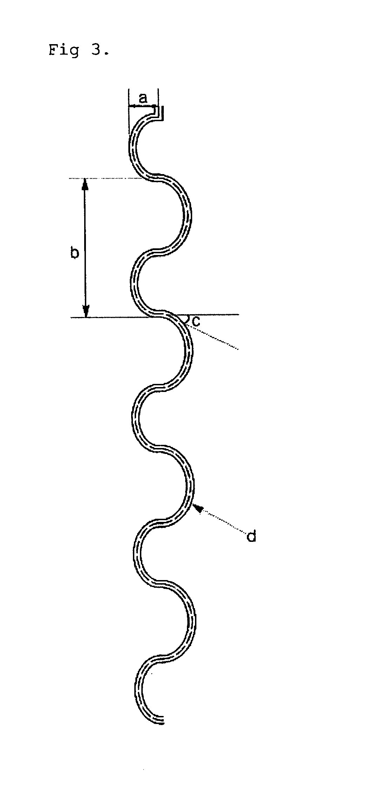

FIG. 2 is an enlarged plan view of the tread block illustrating the portion II of FIG. 1, and FIG. 3 is an enlarged plan view detailedly illustrating the shape of the sipe shown in FIG. 2.

Referring to FIG. 2 and FIG. 3, the sipe 35 is formed as a wave form alternating with amplitude a, cycle b, angle of inclination c, and radius of curvature d along one direction on the plane of the tread block 30.

By forming the sipe 35 as a wave form on the surface of the tread block 30 like above, the biting edge is increased on the tread block 30 to obtain the length of the sipe 35 that is sufficient to increase friction with the road surface.

In the preferred embodiment, it is preferable that the wave portion of the sipe 35 has the amplitude a between 0.05 cm to 5 cm, the cycle b between 0.2 cm to 20 cm, the angle of inclination c between 0° to 90°, and the radius of curvature b between 0.01 cm to 10 cm.

Here, if the amplitude a of the sipe 35 is less than 0.05 cm, the length of the sipe 35 to be formed is too short to obtain sufficient friction on an icy road; if it is more than 5 cm, the length of the sipe 35 to be formed becomes so long so as to lower the rigidity of the tread block.

Likewise, if the cycle b of the sipe 35 is less than 0.2 cm, it could not obtain sufficient friction on a snowy or icy road; if it is more than 20 cm, the length of the sipe 35 becomes so long so as to lower the rigidity of the tread block 30.

And it is preferable that the radius of curvature d of the sipe 35 is determined properly between 0.01 cm to 10 cm according to the amplitude a and cycle b of the sipe 35.

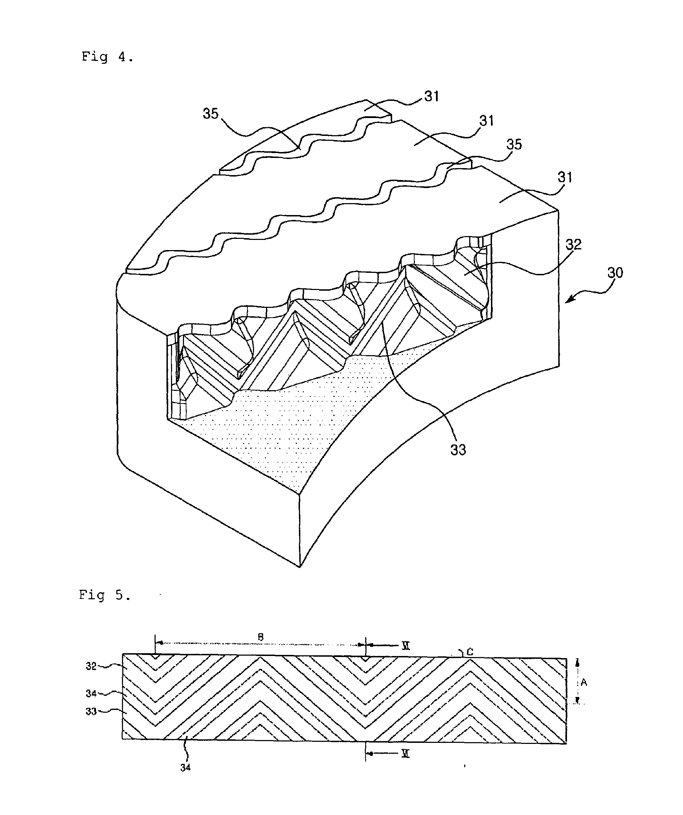

FIG. 4 is a partially cutaway perspective view of the tread block of FIG. 2.

Referring to FIG. 4, the tread block 30 has the plurality of subblocks 31 subdivided by the sipes 35 thereof.

And on each of the side surface 32 of the subblocks 31 subdivided by the sipes 35 is formed at least one protruded portion 33.

The protruded portions 33 are made widthwise in a band shape so as to make concaves and convexes corresponding to each other on the side surface 32 of the subblocks 31 that face each other with each sipe 35 in between.

Therefore, if strain is generated in the respective subblocks 31 subdivided by the sipes 35 when the snow tire 1 is running on a general road, the protruded portions 33 fit into each other to generate internal friction so as to reinforce the rigidity of each other.

Like above, as the rigidity of the subblocks of the snow tire 1 is reinforced by friction of the protruded portions 33, it becomes possible to improve steering performance and braking performance when running on a general road surface, namely, on a wet road or a dry road surface besides a snowy road and an icy road.

FIG. 5 is a side view illustrating the subblock of FIG. 4.

Referring to FIG. 5, the protruded portion 33 can be formed as a wave form with at least one part of it continuing while making a band shape along the width direction of the subblock 31 and alternating in the height direction.

It is preferable that the protruded portion 33 has preset amplitude A and cycle B and is formed as a wave form in up and down directions, and the amplitude A and cycle B of the protruded portion are respectively between 0.05 to 20 cm.

Also, it is more preferable that the protruded portion 33 is formed as a wave form while making an angle C of 0° to 90° with the upper surface of the subblock 31.

Like above, by forming the protruded portion 33 as a wave form while making an angle C with the surface of the subblock 31, the length of the band shape of the protruded portion 33 is increased so as to increase friction between two subblocks 31 that face each other with the sipe 35 in between.

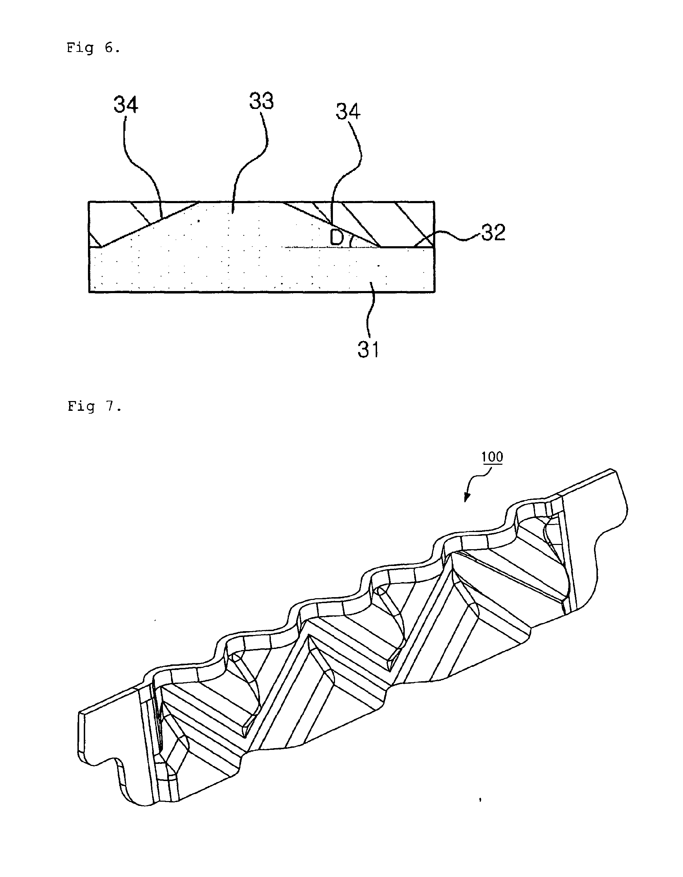

FIG. 6 is a cross sectional view taken along line VI-VI of FIG. 5.

Referring to FIG. 6, the protruded portion 33 can be formed in protrusion while making a sloping side 34 from the side surface 32 of the subblock 31.

Since the protruded portion 33 is formed in protrusion while making an angle of inclination D from the side surface 32 of the subblock 31 like this, occurrence of rubber plucking due to severe resistance can be prevented in the process of drawing out the sipe die 100 (See FIG. 7) after the snow tire has the vulcanization process completed.

At this time, it is preferable to form the sloping side 34 in protrusion while making an angle of inclination D between 0° to 90° with the side surface 32 of the subblock 31.

Namely, if the angle of inclination D exceeds 90°, rubber plucking could happen due to draw-out resistance of the sipe die 100, and if the angle of inclination D is less than 0°, internal friction between subblocks 31 is decreased to reduce the effect of rigidity reinforcing each other.

FIG. 7 is a perspective view illustrating a sipe die applied to a process for preparing the snow tire according to the preferred embodiment of the present invention.

Referring to FIG. 7, the sipe 35 applied to the process for preparing snow tire 1 of this embodiment is made of a hollow space of a three-dimensional shape identical to the sipe die 100 that is inserted during the vulcanization process.

Therefore, by forming the protruded portion 33 on the side surface 32 of two subblocks 31 subdivided by the sipe 35 of a three-dimensional shape in between, the snow tire 1 can maintain the snow traction performance intact while increasing internal friction between subblocks 31 by the protruded portion 33 when running on a wet road or a dry road surface, so that steering performance and braking performance can be improved.

The following table 1 shows in percentage (%) the results of testing the braking and steering performances of the snow tire 1 that has the protruded portions formed on the side surface of the subblock by applying a three-dimensional sipe shape according to the preferred embodiment of the present invention, in comparison with a conventional snow tire in which the side surface of the subblocks makes a plane by applying a conventional two-dimensional sipe shape.

**(Table 1)**

| Comparison | Snow braking | Snow steering | Ice braking | Wet steering | Wet braking | Dry braking |
|---|---|---|---|---|---|---|
| Snow tire of the present invention | 109 | 100 | 102 | 102 | 101 | 104 |
| Conventional snow tire | 100 | 100 | 100 | 100 | 100 | 100 |

As shown in Table 1, it could be understand that the snow tire 1 of the present invention has snow steering performance the same as the conventional tire, but improved performance in snow braking, ice braking, wet braking, wet steering and dry braking.

As mentioned above, the snow tire of the present invention has at least one protruded portion formed on the side surface of the subblocks subdivided by the sipes, so it can improve steering performance and braking performance in general road surface conditions besides the snowy road or icy road by reinforcing the rigidity of the tread block weakened by the sipes.

The snow tire of the present invention has the protruded portions formed in such a way that they make concaves and convexes corresponding to each other on the side surface of the subblocks facing each other with the sipes in between, so when strain is applied to the subblocks the rigidity of the tread block is reinforced by internal friction force between the protruded portions formed on the adjacent subblocks, thereby steering performance and braking performance can be improved.

The snow tire of the present invention has the protruded portions formed in protrusion inclined from the side surface of the subblocks, so it can prevent the phenomenon of rubber being plucked by increased resistance in the process of drawing out the snow tire after vulcanizing it in a vulcanizer.

The snow tire of the present invention has the tread block formed with at least one part of it alternating as a wave form along one direction of it, and the sipes are formed so as to have three-dimensional shapes so that the protruded portions formed on the side surface of the subblocks are subdivided as a wave form in the direction of height. Therefore, it is possible to improve steering performance and braking performance in general road surface conditions besides the snowy road or icy road by reinforcing the rigidity of the tread block decreased by the sipes.

Although the present invention has been described in detail reference to its presently preferred embodiment, it will be understood by those skilled in the art that various modifications and equivalents can be made without departing from the spirit and scope of the present invention, as set forth in the appended claims.

## Claims

1. A snow tire (1) having a carcass to form a body of the tire, a tread that comes in contact with the road surface to protect one portion of the carcass, side walls formed lengthwise across the width of the tire from both sides of the tread to protect the other portion of the carcass, and beads binding both ends of the carcass to fix the tire to a rim, the snow tire comprising:
a plurality of tread blocks (30) subdivided by a plurality of longitudinal grooves (10) which are longitudinally formed on a tread rubber layer consisting of the tread, and a plurality of transverse grooves (20) which are formed widthwise of the tire in cross relation with said longitudinal grooves (10);
a plurality of sipes (35) which are formed in said plurality of tread blocks (30) in parallel each other in one direction to subdivide said tread blocks (30) into a plurality of subblocks (31); and
at least one protruded portion (33) which is formed on the side surface (32) of said subblock (31) subdivided by the plurality of sipes (35) of the tread blocks (30).

2. The snow tire of Claim 1, wherein said protruded portions (33) are formed to make concaves and convexes so as to correspond to each other on the side surface (32) of said subblock (31) that face each other with each of said sipes (35) in between.

3. The snow tire of Claim 2, wherein said protruded portions (33) make a band shape circumferentially on the side surface (32) of said subblock (31).

4. The snow tire of Claim 3, wherein said protruded portions (33) are formed in protrusion while making a sloping side (34) from the side surface (32) of said subblock (31).

5. The snow tire of Claim 4, wherein said sloping side (34) is formed in protrusion while making an angle of inclination between 0° to 90° with the side surface (32) of said subblock (31).

6. The snow tire of Claim 3, wherein said protruded portions (33) are formed as a wave form while at least one part is alternating in the direction of a height of said subblock (31).

7. The snow tire of Claim 6, wherein said protruded portions (33) are formed as a wave form while having a first amplitude and a first cycle, and
said first amplitude and said cycle range from 0.05 cm to 20 cm, respectively.

8. The snow tire of Claim 7, wherein said protruded portions (33) are formed as a wave form while making an angle between 0° to 90° with the upper surface of said subblock (31).

9. The snow tire of Claim 1, wherein said sipes (35) are formed as a wave form while at least one part is alternating along one direction on the surface of said tread block (30).

10. The snow tire of Claim 9, wherein said sipes (35) are formed as a wave form while alternating at a second amplitude and a second cycle, and
said second amplitude ranges from 0.05 cm to 5 cm and said second cycle ranges from 0.2 cm to 20 cm.

11. The snow tire of Claim 10, wherein said sipes (35) have a radius of curvature and are formed roundly as a wave form, and
said radius of curvature ranges from 0.01 cm to 10 cm.
